# EUROPÄISCHE PATENTSCHRIFT

(11) **EP 3 784 897 B1**
(45) Veröffentlichungstag und Bekanntmachung des Hinweises auf die Patenterteilung: **22.06.2022**
(21) Anmeldenummer: 19717249.7
(22) Anmeldetag: 05.04.2019
(51) Int. Cl.: F02M 35/10, F16L 11/15, F16L 9/22, F16L 27/10, B29C 65/02, B29C 65/48, B29C 65/00, B29L 31/00, F16L 27/11

(54) **ROHRKÖRPER FÜR EINE FRISCHLUFTANLAGE EINER BRENNKRAFTMASCHINE**
PIPE DUCT FOR INTAKE AIR SYSTEM OF AN INTERNAL COMBUSTION ENGINE
CONDUIT POUR UN SYSTEME D'AIR FRAIS D'UN MOTEUR A COMBUSTION INTERNE

(30) Priorität: 27.04.2018 DE 102018206615
(43) Veröffentlichungstag der Anmeldung: 03.03.2021
(73) Patentinhaber: Mahle International GmbH, 70376 Stuttgart (DE)
(72) Erfinder: FISCHER, Robert, 70435 Stuttgart (DE); KOHLER, Samuel, 71093 Weil im Schönbuch (DE)
(74) Vertreter: BRP Renaud & Partner mbB Rechtsanwälte Patentanwälte Steuerberater
(86) Internationale Anmeldenummer: PCT/EP2019/058592
(87) Internationale Veröffentlichungsnummer: WO 2019/206599

(56) Entgegenhaltungen:
- EP-A1- 1 070 843
- EP-A1- 2 677 154
- EP-A2- 1 777 062
- DE-A1- 10 051 116
- US-A1- 2017 072 785

## Beschreibung

Die Erfindung betrifft einen Rohrkörper für eine Frischluftanlage einer Brennkraftmaschine sowie eine Frischluftanlage mit wenigstens einem solchen Rohrkörper.

Frischluftanlagen für Brennkraftmaschinen umfassen typischerweise Rohrkörper zum Führen von Luft. Oftmals ist in solche Rohrkörper ein Faltenbalg integriert, so dass die Länge des Rohrkörpers über einen gewissen Bereich hinweg variiert und somit bauraum-spezifischen Gegebenheiten angepasst werden kann. Dies erleichtert die Montage des Rohrkörpers in der Frischluftanlage und entkoppelt die angeschlossenen Bauteile von Vibrationen, wie EP 1 070 843 A1.

Besagter Rohrkörper wird aus Kostengründen in der Regel zunächst zweiteilig mit zwei Rohrkörperteilen hergestellt. Anschließend werden die beiden Rohrkörperteile miteinander verschweißt.

Als nachteilig erweist sich dabei, dass der mit dem Faltenbalg ausgestattete Rohrkörper zwar entlang seiner Längserstreckungsrichtung gestreckt oder gestaucht werden kann, nicht jedoch quer zur Längserstreckungsrichtung gebogen werden kann, was sich in vielen bauraumspezifischen Montagesituationen als vorteilhaft erweisen würde.

Es ist daher eine Aufgabe der vorliegenden Erfindung, eine verbesserte Ausführungsform für einen Rohrkörper zu schaffen, bei welcher der voranstehend beschriebene Nachteil beseitigt ist.

Diese Aufgabe wird durch den Gegenstand der unabhängigen Patentansprüche gelöst. Bevorzugte Ausführungsformen sind Gegenstand der abhängigen Patentansprüche.

Grundidee der Erfindung ist demnach, einen zweiteiligen Rohrkörper mit zwei schalenartigen Rohrkörperteilen derart stoffschlüssig miteinander zu verbinden, dass die sich ergebende stoffschlüssige Verbindung im Bereich des Faltenbalgs außerhalb einer Ebene - im Folgenden auch als "Trennebene" bezeichnet - verläuft, in welcher die beiden Rohrkörperteil in einem zum Faltenbalg benachbarten oder sogar komplementären Bereich des Rohrkörpers aneinandergefügt sind. Auf diese Weise wird der Faltenbalg mit der gewünschten Biegbarkeit versehen. Somit kann der Rohrkörper für Bauraumsituationen verwendet werden, in welchen ein herkömmlicher Rohrkörper nicht eingesetzt werden kann.

Ein erfindungsgemäßer Rohrkörper für eine Frischluftanlage einer Brennkraftmaschine umfasst ein erstes und ein zweites, jeweils schalenartig ausgebildetes Rohrkörperteil. Die beiden Rohrkörperteile sind mittels einer stoffschlüssigen Verbindung miteinander verbunden. Bevorzugt ist diese stoffschlüssige Verbindung eine Schweißverbindung oder eine Klebverbindung. Die beiden Rohrkörperteile weisen einen gemeinsamen Balgabschnitt auf, in welchem der Rohrkörper als Faltenbalg ausgebildet ist. Erfindungsgemäß ist die stoffschlüssige Verbindung außerhalb des Balgabschnitts in einer Trennebene angeordnet im Bereich des Balgabschnitts teilweise außerhalb der Trennebene angeordnet.

Gemäß einer bevorzugten Ausführungsform schneidet die stoffschlüssige Verbindung im Bereich des Balgabschnitts die Trennebene mehrfach. Diese Eigenschaft führt zu verbesserten Biegeeigenschaften.

Besonders bevorzugt oszilliert im Bereich des Balgabschnitts die stoffschlüssige Verbindung in einer Montagerichtung, die sich senkrecht zur Trennebene erstreckt. Auch mit dieser Eigenschaft gehen verbesserte Biegeeigenschaften einher.

Gemäß einer bevorzugten Ausführungsform erstreckt sich der Faltenbalg des Rohrkörpers entlang einer Längserstreckungsrichtung, die orthogonal zur Montagerichtung verläuft. Entlang dieser Längserstreckungsrichtung weist der Faltenbalg eine variable Balglänge auf. Bei dieser Ausführungsform erstreckt sich die stoffschlüssige Verbindung entlang besagter Längserstreckungsrichtung und weist im Bereich des Balgabschnitts einen zick-zack-artigen oder sinusförmigen Verlauf mit Extrempunkten außerhalb der Trennebene auf. Experimentelle Untersuchungen haben gezeigt, dass mit diesen Geometrien besonders gute Biegeeigenschaften des Faltenbalgs einhergehen.

Gemäß einer weiteren bevorzugten Ausführungsform weist die stoffschlüssige Verbindung in einer Blickrichtung auf den Balgabschnitt senkrecht zur Montagerichtung und senkrecht zur Längserstreckungsrichtung einen zick-zack-artigen oder sinusartigen Verlauf auf.

Gemäß einer vorteilhaften Weiterbildung weist der Balgabschnitt bzw. der Faltenbalg Faltenspitzen und Faltengründe auf, die sich entlang der Längserstreckungsrichtung abwechseln. Bei dieser Weiterbildung sind zwei entlang der Längserstreckungsrichtung benachbarte Extrempunkte in zwei benachbarten Faltenspitzen angeordnet. Besonders bevorzugt gilt dies für alle in der stoffschlüssigen Verbindung vorhandenen Extrempunkte.

Besonders bevorzugt kann die die stoffschlüssige Verbindung im Bereich zumindest eines Extrempunkts, vorzugsweise im Bereich mehrerer Extrempunkte, unterbrochen sein, d.h. im Bereich dieses Extrempunkts ist keine stoffschlüssige Verbindung vorhanden, so dass die beiden Rohrkörperteile in diesem Bereich lose aneinander anliegen. Besonders bevorzugt gilt dies für alle in der die stoffschlüssigen Verbindung vorhandenen Extrempunkte. Diese Variante weist einen besonders großen maximalen Biegewinkel auf.

Gemäß einer anderen bevorzugten Ausführungsform ist in wenigstens einem Faltengrund eine Einkerbung ausgebildet. Besonders bevorzugt gilt dies für alle in dem Faltenbalg vorhandenen Faltengründe. Besagte Einkerbung(en) folgt/folgen dem Wirkprinzip eines Scharniers. Dies bedeutet, dass der zum Biegen erforderliche Kraftaufwand gegenüber Faltenbalgen ohne Einkerbung reduziert ist.

Gemäß einer vorteilhaften Weiterbildung dieser Ausführungsform kann entlang der Längserstreckungsrichtung in jedem Faltengrund eine Einkerbung vorgesehen sein. In einer dazu alternativen Weiterbildung ist es denkbar, entlang der Längserstreckungsrichtung nur in jedem n-ten Faltengrund eine Einkerbung vorzusehen, wobei n eine positive ganze Zahl größer gleich 2 ist.

Bevorzugt ist die wenigstens eine Einkerbung in einem Wendepunkt der stoffschlüssigen Verbindung mit sinusförmigem Verlauf angeordnet. In diesem Fall ist die zum Biegen des Faltenbalgs erforderliche Biegekraft besonders gering. Besonders bevorzugt sind daher alle Einkerbungen in einem Wendepunkt der stoffschlüssigen Verbindung mit sinusförmigem Verlauf angeordnet.

Zweckmäßig wird die als Schweißverbindung ausgebildete stoffschlüssige Verbindung durch eine Schweißnaht gebildet. Dies erlaubt die Anwendung gängiger Schweißverfahren zum Aneinanderfügen der beiden Rohrkörperteile.

Gemäß einer vorteilhaften Weiterbildung ist die Schweißnaht im Bereich des Balgabschnitts homogen, vorzugsweise mit einheitlicher Nahttiefe oder/und Nahtbreite, ausgebildet. Dies vereinfacht den Schweißvorgang. Somit vereinfacht sich der gesamte Herstellungsprozess des Rohrkörpers, woraus sich wiederum Kostenvorteile ergeben.

Gemäß einer anderen vorteilhaften Weiterbildung ist die Schweißnaht im Bereich des Balgabschnitts inhomogen, vorzugsweise mit entlang der Längserstreckungsrichtung zumindest abschnittsweise variierender Nahttiefe oder/und Nahtbreite, ausgebildet. Auf diese Weise können insbesondere Abschnitte der Schweißnaht, die beim Biegen besonders hohen Biegekräften ausgesetzt sind, durch abschnittsweises Erhöhen der Nahttiefe oder/und der Nahtbreite verstärkt werden.

Zweckmäßig sind die beiden Rohrkörperteile außerhalb des Balgabschnitts als Halbschalen ausgebildet, deren Schalenränder in der Trennebene angeordnet sind und die stoffschlüssige Verbindung ausbilden.

Zweckmäßig ist das Material des Rohrkörpers ein Kunststoff, vorzugsweise verfestigtes oder/und gepresstes Vlies._Hierbei kann das Vlies durch ein spezielles Werkzeug, insbesondere unter Temperatureinwirkung, Tiefgezogen bzw. Thermogeformt werden. Alternativ können auch Naturfasern oder/und Gemische aus Natur- und Kunstfasern verwendet werden.

Die Erfindung betrifft ferner eine Frischluftanlage für eine Brennkraftmaschine. Die Frischluftanlage umfasst eine Frischluftzuführung zum Einleiten von Frischluft in die Brennkraftmaschine. In der Frischluftzuführung ist eine Filtereinrichtung mit einem Filterelement zum Reinigen der Frischluft angeordnet, die rohseitig eine Rohluftzuführung und reinseitig eine Reinluftabführung aufweist. Die Rohluftzuführung oder/und die Reinluftabführung umfassen wenigstens einen vorangehend vorgestellten Rohrkörper. Die vorangehend erläuterten Vorteile des Rohrkörpers übertragen sich daher auch auf die erfindungsgemäße Frischluftanlage.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch:

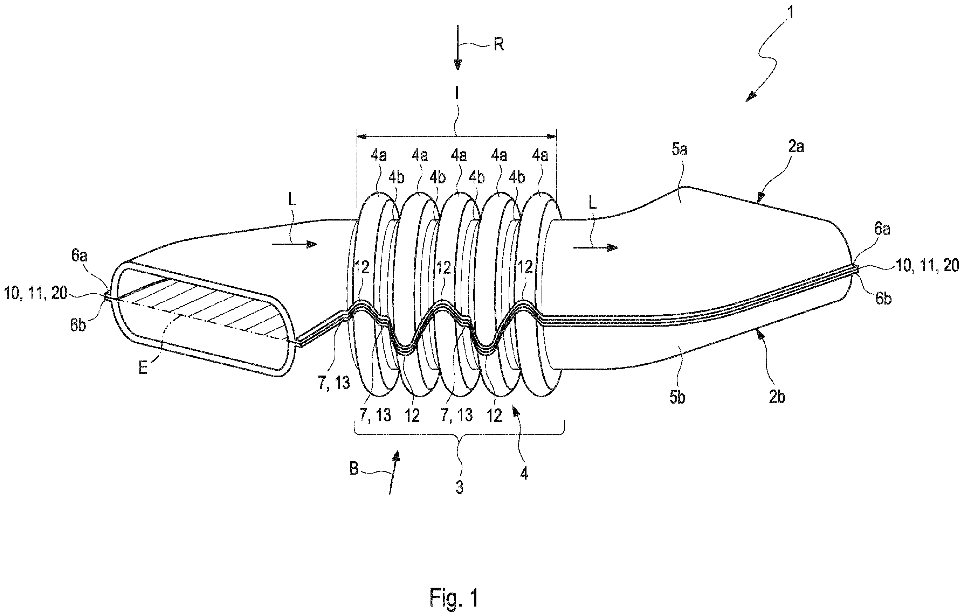

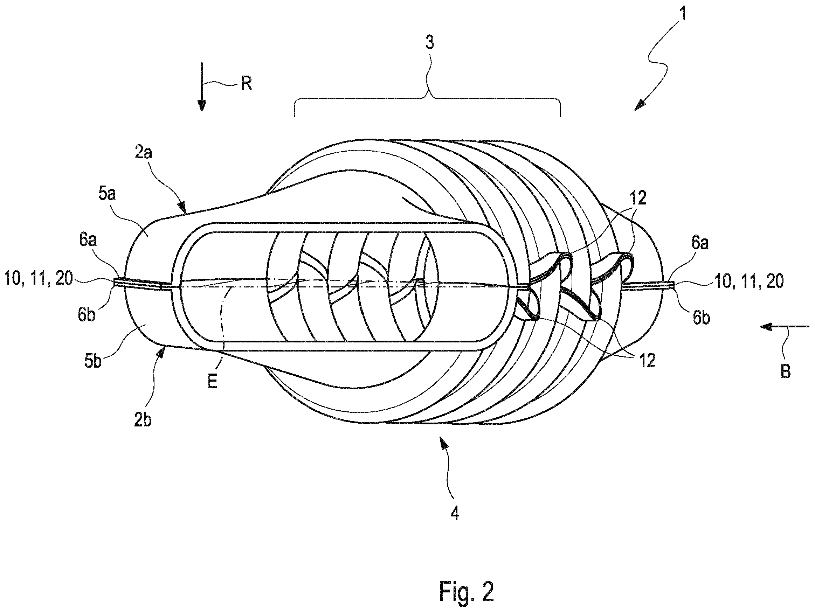

- Fig. 1, 2: ein Beispiel eines erfindungsgemäßen Rohrkörpers in unterschiedlichen perspektivischen Darstellungen.

Die Figuren 1 und 2 illustrieren in unterschiedlichen perspektivischen Darstellungen ein Beispiel eines erfindungsgemäßen Rohrkörpers 1 für Frischluftanlage einer Brennkraftmaschine. Der Rohrkörper 1 umfasst ein erstes Rohrkörperteil 2a und ein zweites Rohrkörperteil 2b, welche beide schalenartig ausgebildet und mittels einer stoffschlüssigen Verbindung 20 in Form einer Schweißverbindung 10 miteinander verbunden sind. Anstelle einer solchen Schweißverbindung 10 kann alternativ eine Klebverbindung verwendet werden. Die beiden Rohrkörperteile 2a, 2b weisen einen gemeinsamen Balgabschnitt 3 auf, in welchem der Rohrkörper 1 als Faltenbalg 4 ausgebildet ist. Als Material für den Rohrkörper 1 kann ein Kunststoff, vorzugsweise ein verfestigtes oder gepresstes Vlies, verwendet werden.

Gemäß den Figuren 1 und 2 verläuft die Schweißverbindung außerhalb des Balgabschnitts 3 in einer Trennebene E. Durch eine Richtung senkrecht zur Trennebene E ist eine Montagerichtung R definiert. Sollen der Rohrkörper 1 aus den beiden Rohrkörperteilen 2a, 2b zusammengebaut werden, so werden die beiden Rohrkörperteile 2a, 2b zunächst so zueinander beabstandet positioniert, dass sie anschließend entlang der Montagerichtung R aufeinander zu bewegt werden können, bis sie sich in der Trennebene E berühren. Zweckmäßig sind die beiden Rohrkörperteile 2a, 2b außerhalb des Balgabschnitts 3 jeweils als Halbschalen 5a, 5b ausgebildet, deren Schalenränder 6a, 6b sich in der Trennebene E berühren. Auf diese Weise können die Schalenränder 6a, 6b der beiden Halbschalen 5a, 5b bzw. der Rohrkörperteile 2a, 2b in der Trennebene E verschweißt, also stoffschlüssig miteinander verbunden werden. Die sich ergebende Schweißverbindung 10 wird durch eine Schweißnaht 11 gebildet.

Entsprechend den Figuren 1 und 2 erstreckt sich der Faltenbalg 4 entlang einer Längserstreckungsrichtung L, die orthogonal zur Montagerichtung R verläuft, und in welcher der Faltenbalg 4 eine variable Balglänge I aufweist. Im Bereich des Balgabschnitts 3 erstreckt sich die Schweißverbindung 10 bzw. die Schweißnaht 11 entlang der Längserstreckungsrichtung L. Der Faltenbalg 4 bzw. der Balgabschnitt 3 setzt sich aus Faltenspitzen 4a und aus Faltengründen 4b zusammen, die sich entlang der Längserstreckungsrichtung L abwechseln.

Die Schweißverbindung 10 bzw. die Schweißnaht 11 weist gemäß den Figuren 1 und 2 einen sinusförmigen Verlauf mit Extrempunkten 12 auf, die außerhalb der Trennebene E liegen. Dies bedeutet, dass die Schweißverbindung 10 bzw. die Schweißnaht 11 im Bereich des Balgabschnitts 3 bzw. des Faltenbalgs 4 die Trennebene E mehrfach schneidet. Die Schweißverbindung 10 bzw. die Schweißnaht 11 ist also im Bereich des Balgabschnitts 3 teilweise außerhalb der Trennebene E angeordnet und oszilliert im Bereich des Balgabschnitts 3 in der Montagerichtung R. Im Beispiel der Figuren sind zwei entlang der Längserstreckungsrichtung L benachbarte Extrempunkte 12 in zwei bzgl. der Längserstreckungsrichtung L benachbarten Faltenspitzen 4a angeordnet.

Aus vorangehend gesagtem ergibt sich, dass die Schweißverbindung 10 bzw. die Schweißnaht 11 in einer Blickrichtung B auf den Balgabschnitt 3, die sich senkrecht sowohl zur Montagerichtung R als auch zur Längserstreckungsrichtung L erstreckt, einen sinusartigen Verlauf aufweist.

Die Schweißverbindung 10 bzw. die Schweißnaht 11 kann im Bereich des Balgabschnitts 3 homogen, vorzugsweise mit einheitlicher Nahttiefe sowie einheitlicher Nahtbreite ausgebildet sein. Alternativ dazu ist es denkbar, dass die Schweißverbindung 10 bzw. die Schweißnaht 11 zumindest im Bereich des Balgabschnitts 3 inhomogen, vorzugsweise mit entlang der Längserstreckungsrichtung L zumindest abschnittsweise variierender Nahttiefe bzw. Nahtbreite, ausgebildet ist. Insbesondere kann die Schweißverbindung 10 bzw. die Schweißnaht 11 im Bereich der Extrempunkte 12 unterbrochen, also nicht vorhanden sein.

In den Faltengründen 4b können Einkerbungen 7 ausgebildet sein. Denkbar ist es, entlang der Längserstreckungsrichtung L nur in jedem n-ten Faltengrund 4b eine jeweilige Einkerbung 7 vorzusehen, wobei n eine positive ganze Zahl größer gleich 2 ist. Wird n gleich 2 gewählt, so ist also in genau jedem zweiten Faltengrund 4b eine Einkerbung 7 vorhanden. In einer dazu alternativen Variante kann entlang der Längserstreckungsrichtung L in jedem Faltengrund 4b des Faltenbalgs 4 eine Einkerbung 7 vorgesehen ist. Besitzt die Schweißverbindung 10 bzw. die Schweißnaht 11 wie im Beispielszenario einen sinusförmigen Verlauf, so sind die vorhandenen Einkerbungen 7 bevorzugt in Wendepunkten 13 des sinusförmigen Verlaufs angeordnet sein.

In einer nicht dargestellten Variante des Beispiels kann die Schweißverbindung 10 bzw. die Schweißnaht 11 anstelle eines sinusförmigen Verlaufs einen zickzack-artigen Verlauf aufweisen. Denkbar ist auch eine Kombination aus einem zickzack-artigen und einem sinusförmigen Verlauf. Voranstehende Erläuterungen zu einer Schweißverbindung 10 bzw. einer Schweißnaht 11 mit sinusförmigem Verlauf gelten daher, soweit sinnvoll, mutatis mutandis auch für ein Schweißverbindung 10 bzw. eine Schweißnaht 11 mit einem zickzack-artigen Verlauf. *****

## Patentansprüche

1. Rohrkörper (1), insbesondere für eine Frischluftanlage einer Brennkraftmaschine,
- mit einem ersten und mit einem zweiten, jeweils schalenartig ausgebildeten Rohrkörperteil (2a, 2b), welche mittels einer stoffschlüssigen Verbindung (20), vorzugsweise mittels einer Schweißverbindung (10) oder mittels einer Klebverbindung, miteinander verbunden sind und einen gemeinsamen Balgabschnitt (3) aufweisen, in welchem der Rohrkörper (1) als Faltenbalg (4) ausgebildet ist,
- wobei die stoffschlüssige Verbindung (20) außerhalb des Balgabschnitts (3) in einer Trennebene (E) angeordnet ist und im Balgabschnitt (3) teilweise außerhalb der Trennebene (E) angeordnet ist,
- wobei der Faltenbalg (4) Faltenspitzen (4a) und Faltengründe (4b) aufweist, die sich entlang einer Längserstreckungsrichtung (L) des Faltenbalgs (4) abwechseln,
**dadurch gekennzeichnet, dass**
- die Faltenspitzen (4a) des ersten Rohrkörperteils (2a) mit den Faltenspitzen (4a) des zweiten Rohrkörperteils (2b) und die Faltengründe (4b) des ersten Rohrkörperteils (2a) mit den Faltengründen (4b) des zweiten Rohrkörperteils (2b) je bündig abschließen, so dass in dem Balgabschnitt (4) des Rohrkörpers (1) die Faltenspitzen (4a) und die Faltengründe (4b) entlang einer senkrecht zur Längserstreckungsrichtung (L) verlaufenden Umfangsrichtung des Faltenbalgs (4) vollständig geschlossen umlaufend ausgebildet sind.

2. Rohrkörper nach Anspruch 1,
**dadurch gekennzeichnet, dass**
im Bereich des Balgabschnitts (3) die stoffschlüssige Verbindung (20) die Trennebene (E) mehrfach schneidet.

3. Rohrkörper nach Anspruch 1 oder 2,
**dadurch gekennzeichnet, dass**
im Bereich des Balgabschnitts (3) die stoffschlüssige Verbindung (20) in einer Montagerichtung (R), die sich senkrecht zur Trennebene (E) erstreckt, oszilliert.

4. Rohrkörper nach einem der Ansprüche 1 bis 3,
**dadurch gekennzeichnet, dass**
- sich der Faltenbalg (4) entlang der Längserstreckungsrichtung (L) erstreckt, die orthogonal zur Montagerichtung (R) verläuft, und entlang welcher der Faltenbalg eine variable Balglänge (I) aufweist,
- sich die die stoffschlüssige Verbindung (20) entlang der Längserstreckungsrichtung (L) erstreckt und im Bereich des Balgabschnitts (3) einen zickzackartigen oder sinusförmigen Verlauf mit Extrempunkten (12) außerhalb der Trennebene (E) aufweist.

5. Rohrkörper nach Anspruch 4,
**dadurch gekennzeichnet, dass**
die die stoffschlüssige Verbindung (20) in einer Blickrichtung (B) auf den Balgabschnitt (3) senkrecht zur Montagerichtung (R) und senkrecht zur Längserstreckungsrichtung (L) einen zick-zack-artigen oder sinusartigen Verlauf aufweist.

6. Rohrkörper nach Anspruch 4 oder 5,
**dadurch gekennzeichnet, dass**
- zwei entlang der Längserstreckungsrichtung (L) benachbarte Extrempunkte (12) in zwei benachbarten Faltenspitzen (4a) angeordnet sind.

7. Rohrkörper nach Anspruch 6,
**dadurch gekennzeichnet, dass**
die die stoffschlüssige Verbindung (20) im Bereich zumindest eines Extrempunkts (12), vorzugsweise im Bereich mehrerer Extrempunkte (12), unterbrochen ist.

8. Rohrkörper nach Anspruch 6 oder 7,
**dadurch gekennzeichnet, dass**
in wenigstens einem Faltengrund (4b) eine Einkerbung (7) ausgebildet ist.

9. Rohrkörper nach einem der Ansprüche 6 bis 8,
**dadurch gekennzeichnet, dass**
- entlang der Längserstreckungsrichtung (L) in jedem Faltengrund (4b) eine Einkerbung (7) vorgesehen ist, oder dass
- entlang der Längserstreckungsrichtung (L) nur in jedem n-ten Faltengrund (4b) eine Einkerbung (7) vorgesehen ist, wobei n eine positive ganze Zahl größer gleich 2 ist.

10. Rohrkörper nach Anspruch 9,
**dadurch gekennzeichnet, dass**
die wenigstens eine Einkerbung (7) in einem Wendepunkt (13) der stoffschlüssigen Verbindung (20) mit sinusförmigem Verlauf angeordnet ist.

11. Rohrkörper nach einem der vorhergehenden Ansprüche,
**dadurch gekennzeichnet, dass**
die als Schweißverbindung (10) ausgebildete stoffschlüssige Verbindung (20) durch eine Schweißnaht (11) gebildet ist.

12. Rohrkörper nach Anspruch 11,
**dadurch gekennzeichnet, dass**
die Schweißnaht (11) im Bereich des Balgabschnitts (4) homogen, vorzugsweise mit einheitlicher Nahttiefe oder/und Nahtbreite, ausgebildet ist.

13. Rohrkörper nach Anspruch 11,
**dadurch gekennzeichnet, dass**
die Schweißnaht (11) im Bereich des Balgabschnitts (3) inhomogen, vorzugsweise mit entlang der Längserstreckungsrichtung (L) zumindest abschnittsweise variierender Nahttiefe oder/und Nahtbreite, ausgebildet ist.

14. Rohrkörper nach einem der vorhergehenden Ansprüche,
**dadurch gekennzeichnet, dass**
die beiden Rohrkörperteile (2a, 2b) außerhalb des Balgabschnitts (3) als Halbschalen (5a, 5b) ausgebildet sind, deren Schalenränder (6a, 6b) in der Trennebene (E) angeordnet sind und die stoffschlüssige Verbindung (20) ausbilden.

15. Rohrkörper nach einem der vorhergehenden Ansprüche,
**dadurch gekennzeichnet, dass**
das Material des Rohrkörpers (1) ein Kunststoff, vorzugsweise ein verfestigtes oder/und gepresstes Vlies, ist.

16. Frischluftanlage für eine Brennkraftmaschine,
- mit einer Frischluftzuführung zum Einleiten von Frischluft in die Brennkraftmaschine,
- wobei in der Frischluftzuführung eine Filtereinrichtung mit einem Filterelement zum Reinigen der Frischluft angeordnet ist, die rohseitig eine Rohluftzuführung und reinseitig eine Reinluftabführung aufweist,
- wobei die Rohluftzuführung oder/und die Reinluftabführung zumindest einen Rohrkörper (1) nach einem der vorhergehenden Ansprüche umfassen.

## Claims

1. Pipe duct (1), particularly for a fresh air system of an internal combustion engine,
- having a first and a second respectively shell-shaped hollow body part (2a, 2b), which are connected to one another by means of a material-fitting connection (20), preferably by means of a welding connection (10) or by means of an adhesive connection, and have a common bellows portion (3) in which the pipe duct (1) is formed as a bellows (4),
- wherein the material-fitting connection (20) is arranged externally to the bellows portion (3) in a separation plane (E) and in the bellows portion (3) partially externally to the separation plane (E),
- wherein the bellows (4) has bellows peaks (4a) and bellows grounds (4b), which alternate along a longitudinal extension direction (L) of the bellows (4), **characterised in that**
- the bellows peaks (4a) of the first pipe duct part (2a) finish in each case flush with the bellows peaks (4a) of the second pipe duct part (2b) and the bellows grounds (4b) of the first pipe duct part (2a) finish in each case flush with the bellows grounds (4b) of the second pipe duct part (2b), such that in the bellows portion (4) of the pipe duct (1) the bellows peaks (4a) and the bellows grounds (4b) are formed so as to circulate in a completely closed manner along a circumferential direction, extending perpendicularly to the longitudinal extension direction (L), of the bellows (4).

2. Pipe duct according to claim 1,
**characterised in that**
in the region of the bellows portion (3) the material-fitting connection (20) cuts the separation plane (E) in multiple locations.

3. Pipe duct according to claim 1 or 2,
**characterised in that**
in the region of the bellows portion (3) the material-fitting connection (20) oscillates in an installation direction (R) which extends perpendicularly to the separation plane (B).

4. Pipe duct according to any of claims 1 to 3,
**characterised in that**
- the bellows (4) extends along the longitudinal extension direction (L) which extends orthogonally to the installation direction (R) and along which the bellows has a variable bellows length (I),
- the material-fitting connection (20) extends along the longitudinal extension direction (L) and in the scope of the bellows portion (3) has a zigzag-shaped or sinusoidal course with apses (12) externally to the separation plane (E).

5. Pipe duct according to claim 4,
**characterised in that**
in a viewing direction (B) onto the bellows portion (3) the material-fitting connection (20) has a zigzag-shaped or sinusoidal course perpendicularly to the installation direction (R) and perpendicularly to the longitudinal extension direction (L).

6. Pipe duct according to claim 4 or 5,
**characterised in that**
- two apses (12) which are adjacent along the longitudinal extension direction (L) are arranged in two adjacent bellows peaks (4a)

7. Pipe duct according to claim 6,
**characterised in that** the material-fitting connection (20) is interrupted in the scope of at least one apse (12), preferably in the scope of several apses (12).

8. Pipe duct according to claim 6 or 7,
**characterised in that**
a notch (7) is formed in at least one bellows ground (4b).

9. Pipe duct according to any of claims 6 to 8,
**characterised in that**
- a notch (7) is provided along the longitudinal extension direction (L) in each bellows ground (4b), or that
- a notch (7) is provided along the longitudinal extension direction (L) only in each nth bellows ground (4b), wherein n is a positive integer greater than or equal to 2.

10. Pipe duct according to claim 9,
**characterised in that**
the at least one notch (7) is arranged at a turning point (13) of the material-fitting connection (20) with sinusoidal course.

11. Pipe duct according to any of the preceding claims,
**characterised in that**
the material-fitting connection (20) designed as a welding connection (10) is formed by a welding seam (11).

12. Pipe duct according to claim 11,
**characterised in that**
the welding seam (11) is formed to be homogeneous, preferably with uniform seam depth and/or seam breadth.

13. Pipe duct according to claim 11,
**characterised in that**
the welding seam (11) is formed in the scope of the bellows portion (3) to be inhomogeneous, preferably with a seam depth and/or seam breadth which varies along the longitudinal extension direction (L) at least in some portions.

14. Pipe duct according to any of the preceding claims,
**characterised in that**
the two pipe duct parts (2a, 2b) are formed externally to the bellows portion (3) as half-shells (5a, 5b), the shell edges (6a, 6b) of which are arranged in the separation plane (E) and form the material fitting connection (20).

15. Pipe duct according to any of the preceding claims,
**characterised in that**
the material of the pipe duct (1) is a plastic, preferably a consolidated and/or pressed nonwoven.

16. Fresh air system for an internal combustion engine,
- having a fresh air supply for introducing fresh air into the internal combustion engine,
- wherein in the fresh air supplied is arranged a filter device having a filter element for cleaning the fresh air, which has on the dirty side a dirty air supply and on the clean side a clean air supply,
- wherein the dirty air supply and/or the clean air supply comprise at least one pipe duct (1) according to any of the preceding claims.

## Revendications

1. Corps tubulaire (1), en particulier pour une installation d'air frais d'un moteur à combustion interne,
- avec une première et avec une seconde partie de corps tubulaire (2a, 2b) réalisées respectivement comme une coque qui sont reliées au moyen d'une liaison (20) de matière de préférence au moyen d'une liaison soudée (10) ou au moyen d'une liaison collée, entre elles et présentent une section de plissement (3) commune, dans laquelle le corps tubulaire (1) est réalisé comme soufflet (4),
- dans lequel la liaison de matière (20) est agencée en dehors de la section de plissement (3) dans un plan de séparation (E) et est agencée dans la section de plissement (3) partiellement en dehors du plan de séparation (E),
- dans lequel le soufflet (4) présente des pointes de soufflet (4a) et des fonds de soufflet (4b) qui s'alternent le long d'un sens d'étendue longitudinale (L) du soufflet (4),
**caractérisé en ce que**
- les pointes de soufflet (4a) de la première partie de corps tubulaire (2a) avec les pointes de soufflet (4a) de la seconde partie de corps tubulaire (2b) et les fonds de soufflet (4b) de la première partie de corps tubulaire (2a) avec les fonds de soufflet (4b) de la seconde partie de corps tubulaire (2b) se terminent chacune à fleur de sorte que dans la section de plissement (3) du corps tubulaire (1) les pointes de soufflet (4a) et les fonds de soufflet (4b) sont réalisés complètement fermés en périphérie le long d'un sens périphérique s'étendant perpendiculairement au sens d'étendue longitudinale (L) du soufflet (4).

2. Corps tubulaire selon la revendication 1,
**caractérisé en ce que**
dans la zone de la section de plissement (3) la liaison de matière (20) couple plusieurs fois le plan de séparation (E).

3. Corps tubulaire selon la revendication 1 ou 2,
**caractérisé en ce que**
dans la zone de la section de plissement (3) la liaison de matière (20) oscille dans un sens de montage (R) qui s'étend perpendiculairement au plan de séparation (E).

4. Corps tubulaire selon l'une quelconque des revendications 1 à 3,
**caractérisé en ce que**
- le soufflet (4) s'étend le long du sens d'étendue longitudinale (L) qui s'étend orthogonalement au sens de montage (R), et le long duquel le soufflet présente une longueur de soufflet (I) variable,
- la liaison de matière (20) s'étend le long du sens d'étendue longitudinale (L) et présente dans la zone de la section de plissement (3) une étendue en zigzag ou sinusoïdale avec des points extrêmes (12) en dehors du plan de séparation (E).

5. Corps tubulaire selon la revendication 4,
**caractérisé en ce que**
la liaison de matière (20) présente dans un sens d'observation (B) sur la section de plissement (3) perpendiculairement au sens de montage (R) et perpendiculairement au sens d'étendue longitudinale (L) une étendue en zigzag ou sinusoïdale.

6. Corps tubulaire selon la revendication 4 ou 5,
**caractérisé en ce que**
- deux points extrêmes (12) contigus le long du sens d'étendue longitudinale (L) sont agencés dans deux pointes de soufflet (4a) contiguës.

7. Corps tubulaire selon la revendication 6,
**caractérisé en ce que** la liaison de matière (20) est interrompue dans la zone d'au moins un point extrême (12), de préférence dans la zone de plusieurs points extrêmes (12).

8. Corps tubulaire selon la revendication 6 ou 7,
**caractérisé en ce que**
dans au moins un fond de soufflet (4b) une rainure (7) est réalisée.

9. Corps tubulaire selon l'une quelconque des revendications 6 à 8,
**caractérisé en ce que**
- une rainure (7) est prévue le long du sens d'étendue longitudinale (L) dans chaque fond de soufflet (4b), ou que
- une rainure (7) est prévue le long du sens d'étendue longitudinale (L) seulement dans chaque nième fond de soufflet (4b), dans lequel n est un nombre entier positif supérieur ou égal à 2.

10. Corps tubulaire selon la revendication 9,
**caractérisé en ce**
**que** l'au moins une rainure (7) est agencée dans un tournant (13) de la liaison de matière (20) avec une étendue sinusoïdale.

11. Corps tubulaire selon l'une quelconque des revendications précédentes,
**caractérisé en ce que**
la liaison de matière (20) réalisée comme liaison soudée (10) est formée par un cordon de soudure (11).

12. Corps tubulaire selon la revendication 11,
**caractérisé en ce que**
le cordon de soudure (11) est réalisé dans la zone de la section de plissement (4) de manière homogène, de préférence avec une profondeur de cordon et/ou largeur de cordon uniforme.

13. Corps tubulaire selon la revendication 11,
**caractérisé en ce que**
le cordon de soudure (11) est réalisé dans la zone de la section de plissement (3) de manière non homogène, de préférence avec une profondeur de cordon et/ou largeur de cordon variant le long du sens d'étendue longitudinale (L) au moins par sections.

14. Corps tubulaire selon l'une quelconque des revendications précédentes,
**caractérisé en ce que**
les deux parties de corps tubulaire (2a, 2b) sont réalisées en dehors de la section de plissement (3) comme demi-coques (5a, 5b), dont les bords de coque (6a, 6b) sont agencés dans le plan de séparation (E) et réalisent la liaison de matière (20).

15. Corps tubulaire selon l'une quelconque des revendications précédentes,
**caractérisé en ce que**
le matériau du corps tubulaire (1) est une matière plastique, de préférence un nontissé solidifié et/ou pressé.

16. Installation d'air frais pour un moteur à combustion interne,
- avec une alimentation d'air frais pour l'introduction d'air frais dans le moteur à combustion interne,
- dans lequel dans l'alimentation d'air frais, un dispositif de filtre avec un élément de filtre pour l'épuration d'air frais est agencé, lequel présente côté brut une alimentation d'air brut et côté pur une évacuation d'air pur,
- dans lequel l'alimentation d'air brut et/ou l'évacuation d'air pur comportent au moins un corps tubulaire (1) selon l'une quelconque des revendications précédentes.
